# EUROPÄISCHE PATENTANMELDUNG

(11) **EP 2 557 318 A1**
(43) Veröffentlichungstag der Anmeldung: **13.02.2013**
(21) Anmeldenummer: 12178632.1
(22) Anmeldetag: 31.07.2012
(51) Int. Cl.: F16B 5/06, F16B 21/07, F16B 37/08

(54) **Befestigungsanordnung eines Gehäuses einer Fahrzeugkomponente an einem Fahrzeugbauteil und Gehäuse für eine Fahrzeugkomponente**

(30) Priorität: 09.08.2011 DE 102011109829
(71) Anmelder: Valeo Schalter und Sensoren GmbH, 74321 Bietigheim-Bissingen (DE)
(72) Erfinder: Brunner, Erhard, 86720 Nordlingen-Lopfingen (DE); Felber, Franz, 86681 Fünfstetten (DE)

(57) **Zusammenfassung**

Die Erfindung betrifft eine Befestigungsanordnung (26) eines Gehäuses (1) für eine Komponente eines Kraftfahrzeugs an einem Fahrzeugbauteil (2), bei welcher das Gehäuse (1) eine Befestigungsplatte (4) mit einer Durchgangsöffnung (7) aufweist, in welche ein Befestigungsbolzen (8) zur Befestigung des Gehäuses (1) an dem Fahrzeugbauteil (2) einsteckbar ist, und an der Befestigungsplatte (4) zumindest zwei Rastnasen (18, 19) angeordnet sind, die beim Einstecken des Befestigungsbolzens (8) in die Durchgangsöffnung (7) in korrespondierende Rastkerben (23) des Befestigungsbolzens (8) einrasten, wobei die Rastnasen (18, 19) bezüglich des Befestigungsbolzens (8) in radialer Richtung federnd ausgebildet sind, so dass durch Bewegen der Rastnasen (18, 19) in radialer Richtung von dem Befestigungsbolzen (8) weg die Rastverbindung zwischen dem Befestigungsbolzen (8) einerseits und den Rastnasen (18, 19) andererseits lösbar ist.

## Beschreibung

Die Erfindung betrifft eine Befestigungsanordnung eines Gehäuses für eine - insbesondere elektronische - Komponente eines Kraftfahrzeugs an einem Fahrzeugbauteil, bei welcher das Gehäuse eine Befestigungsplatte mit einer Durchgangsöffnung aufweist, in welche ein Befestigungsbolzen zur Befestigung des Gehäuses an dem Fahrzeugbauteil einsteckbar ist. An der Befestigungsplatte sind zumindest zwei Rastnasen angeordnet, die beim Einstecken des Befestigungsbolzens in die Durchgangsöffnung in korrespondierende Rastkerben des Befestigungsbolzens einrasten. Die Erfindung betrifft außerdem ein Gehäuse für eine Komponente eines Kraftfahrzeugs.

Es geht vorliegend insbesondere um die Befestigung eines Gehäuses eines Steuergeräts (auch unter der Bezeichnung ECU bekannt: Electronic Control Unit) an einem Fahrzeugbauteil, etwa einem Blechteil des Kraftfahrzeugs. Es ist Stand der Technik, ein derartiges Gehäuse mithilfe von Blechschrauben oder Gewindebolzen, Scheiben und Muttern im Kraftfahrzeug zu befestigen. Eine solche Befestigungsart ist relativ aufwändig: Es muss zunächst eine Schraube durch die Durchgangsöffnung des Gehäuses hindurch gesteckt werden, und anschließend muss eine Scheibe auf die Schraube aufgesteckt und die Mutter mit der Schraube verbunden werden.

Diesem Nachteil begegnet das Dokument DE 103 34 734 B4, in welchem eine Befestigungsvorrichtung von Bauteilen an Kraftfahrzeugen beschrieben ist. Diese Befestigungsvorrichtung beinhaltet ein an einem Grundkörper angeordnetes Befestigungselement - etwa einen Befestigungsbolzen - sowie einen an dem Befestigungselement angreifenden Clip, der am Grundkörper zu befestigende Bauteile trägt. Der Clip hat einen Träger zur Aufnahme der zu befestigenden Teile sowie einen an dem Träger parallel zur Ebene des Grundkörpers verschiebbar geführten Befestigungskörper, welcher am Befestigungselement angreift und den Clip am Grundkörper befestigt. Der Clip kann auch auf das Befestigungselement aufgesteckt werden. Das Befestigungselement weist hierfür außenseitig Einkerbungen auf, in welche elastische Rippen des Befestigungskörpers eingreifen. Die elastischen Rippen sind dabei an einem Innenumfang des Befestigungskörpers angeordnet und in axialer Richtung elastisch ausgebildet. Beim Einstecken des Befestigungselements in den Befestigungskörper rasten somit die elastischen Rippen des Befestigungskörpers in die Einkerbungen des Befestigungselements ein. Somit kann der Clip durch einfaches Aufstecken auf das Befestigungselement au dem Fahrzeugbauteil befestigt werden. Eine besondere Herausforderung besteht nun darin, Maßnahmen zu treffen, die neben einer einfachen Montage des Gehäuses an dem Fahrzeugbauteil auch eine besonders aufwandsarme Demontage ermöglichen.

Es ist Aufgabe der Erfindung, eine Befestigungsanordnung eines Gehäuses an einem Fahrzeugbauteil sowie ein Gehäuse zu schaffen, bei welcher bzw. bei welchem neben einer einfachen Montage darüber hinaus eine einfache Demontage des Gehäuses ermöglicht wird.

Diese Aufgabe wird erfindungsgemäß durch eine Befestigungsanordnung sowie durch ein Gehäuse mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Befestigungsanordnung umfasst ein Gehäuse für eine Komponente eines Kraftfahrzeugs, wie auch ein Fahrzeugbauteil, an welchem das Gehäuse befestigbar ist. Die Befestigungsanordnung beinhaltet auch einen Befestigungsbolzen, welcher zur Befestigung des Gehäuses an dem Fahrzeugbauteil ausgebildet ist. Das Gehäuse weist eine Befestigungsplatte mit einer Durchgangsöffnung auf, in welche der Befestigungsbolzen einsteckbar ist. An der Befestigungsplatte sind zumindest zwei Rastnasen angeordnet, die beim Einstecken des Befestigungsbolzens in die Durchgangsöffnung in korrespondierende Rastkerben des Befestigungsbolzens einrasten und hierdurch eine Bewegung des Befestigungsbolzens in eine zur Einsteckrichtung des Befestigungsbolzens entgegengesetzte Richtung verhindern. Erfindungsgemäß ist vorgesehen, dass bezüglich des Befestigungsbolzens die Rastnasen in radialer Richtung federnd ausgebildet sind, sodass durch Bewegen der Rastnasen in radialer Richtung von dem Befestigungsbolzen weg die Rastverbindung zwischen dem Befestigungsbolzen einerseits und den Rastnasen andererseits lösbar ist.

Anders als im Gegenstand gemäß Dokument DE 103 34 734 B4 sind die Rastnasen somit nicht in axialer Richtung bezüglich des Befestigungsbotzens, sondern in radialer Richtung elastisch bzw. federnd ausgebildet, sodass sie ohne viel Aufwand von dem Befestigungsbolzen wegbewegt werden können. Durch das einfache Bewegen der Rastnasen in radialer Richtung von dem Befestigungsbolzen weg kann somit die Rastverbindung zwischen dem Befestigungsbolzen und den Rastnasen ohne viel Aufwand gelöst werden. Neben einer einfachen Montage ist somit auch eine einfache Demontage möglich: Während zum Befestigen des Gehäuses an dem Fahrzeugbauteil lediglich der Befestigungsbolzen in die Durchgangsöffnung der Befestigungsplatte eingesteckt werden muss, erfolgt die Demontage durch einfaches Bewegen der Rastnasen in radialer Richtung von dem Befestigungsbolzen weg, so dass die Rastnasen aus den Rastkerben des Befestigungsbolzens herausgenommen werden und den Befestigungsbolzen somit frei geben. Die erfindungsgemäße Befestigungsanordnung ist zudem besonders kostensparend und bauteilreduziert; denn sie beinhaltet neben dem Gehäuse und dem Fahrzeugbauteil lediglich noch den Befestigungsbolzen, der in die Durchgangsöffnung eingesteckt wird. Es erübrigt sich der Einsatz von weiteren Bauelementen, wie beispielsweise Scheiben und Muttern, mit den damit verbundenen Nachteilen hinsichtlich der Kosten, der Montagezeiten und dergleichen.

Die Rastkerben des Befestigungsbolzens sind an seinem Außenumfang bzw. in Umfangsrichtung ausgebildet. Sie können durch parallel zueinander verlaufende Rastnuten oder aber alternativ durch ein einfaches Gewinde gebildet sein.

Die Rastnasen sind an der Befestigungsplatte ausgebildet. Sie können als von der Befestigungsplatte abstehende Erhebungen ausgeführt sein, die an ihren jeweiligen Enden jeweils eine Rastspitze bzw. Rastkante aufweisen, welche in die korrespondierenden Rastkerben des Befestigungsbolzens einrasten. Bevorzugt sind - in axialer Richtung gesehen - neben den zumindest zwei Rastnasen keine weiteren Rastnasen vorgesehen.

Der Befestigungsbolzen kann mit dem Fahrzeugbauteil fest verbunden sein, etwa mithilfe einer Schweißverbindung. In diesem Falle ist der Befestigungsbolzen ein von dem Fahmeugbauteil abstehender Schweißbolzen. Alternativ kann auch vorgesehen sein, dass der Befestigungsbolzen ein von dem Fahrzeugbauteil separat bereitgestelltes Element ist, welches in eine Durchgangöffnung des Fahrzeugbauteils sowie in die Durchgangsöffnung des Gehäuses eingesteckt wird.

Es erweist sich als vorteithaft, wenn die Rastnasen in radialer Richtung an zwei gegenüberliegenden Seiten der Durchgangsöffnung - insbesondere spiegelsymmetrisch - an der Befestigungsplatte angeordnet und in Richtung aufeinander zu sowie voneinander weg federnd bzw. elastisch ausgebildet sind. Dann ist die Rastverbindung zwischen dem Befestigungsbolzen einerseits und den Rastnasen andererseits durch einfaches Bewegen der Rastnasen in Richtung voneinander weg lösbar. Einerseits ist somit eine besonders stabile und rutschfeste bzw. betriebssichere Befestigung gewährleistet; auf der anderen Seite kann die Rastverbindung somit ohne viel Aufwand mit einem Demontagewerkzeug gelöst werden.

Bevorzugt ist das Gehäuse zur Aufnahme eines Steuergerätes des Kraftfahrzeugs als Komponente ausgebildet.

Anders als im Gegenstand gemäß Druckschrift DE 103 34 734 B4 sind die Rastnasen vorzugsweise einstückig mit der Befestigungsplatte - und ohne Sollbruchstellen - ausgebildet. Somit ist die Anzahl der Bauelemente auf ein Minimum reduziert und die Montage sowie Demontage des Gehäuses besonders einfach.

Die Rastnasen und/oder die Befestigungsplatte sind bevorzugt aus elastischem Kunststoff ausgebildet. Auch das gesamte Gehäuse kann aus elastischem Kunststoff ausgebildet sein. Diese Ausführungsform sorgt für eine spielfreie Anordnung des Gehäuses an dem Fahrzeugbauteil, so dass auch Klappgeräusche in Betrieb des Kraftfahrzeugs ausgeschlossen sind.

Besonders bevorzugt ist an einer dem Fahrzeugbauteil zugewandten Seite der Befestigungsplatte zumindest eine Abstütznoppe - insbesondere zumindest zwei Abstütznoppen - zum Abstützen der Befestigungsplatte an dem Fahrzeugbauteil angeordnet. Diese Abstütznoppe kann einstückig mit dem Gehäuse bzw. mit der Befestigungsplatte ausgebildet sein. Diese Abstütznoppe gewährleistet einen spielfreien Sitz des Gehäuses an dem Fahrzeugbauteil.

Vorzugsweise ist die zumindest eine Abstütznoppe aus einem elastischem Material, insbesondere aus elastischem Kunststoff und/oder aus Gummi, ausgebildet. Neben einer spielfreien Anbringung des Gehäuses an den Fahrzeugbauteilen wird somit außerdem eine besonders rutschfeste und betriebssichere Anordnung gewährleistet.

Das Gehäuse kann zwei von einem Grundkörper des Gehäuses abstehende - und sich insbesondere parallel zueinander erstreckende - Trägerarm aufweisen, durch welche die Befestigungsplatte getragen wird. Auch diese Trägerarme können plattenartige Elemente sein, die parallel zueinander und senkrecht zur Befestigungsplatte angeordnet sind. Die Befestigungsplatte erstreckt sich dann zwischen den beiden Trägerarmen. Somit ist das Gehäuse besonders robust und die Verbindung der Befestigungsplatte mit dem Grundkörper des Gehäuses besonders stabil.

In der Ebene der Befestigungsplatte kann auch ein Streifen vorgesehen sein, der als eine Vorspannrippe dient. Auch dieser Streifen kann durch die beiden Trägerarme getragen werden bzw. sich zwischen den beiden Trägerarmen erstrecken. Der Streifen ist bevorzugt zwischen dem Grundkörper einerseits und der Befestigungsplatte andererseits angeordnet, und zwar insbesondere in einem Abstand sowohl zur Befestigungsplatte als auch zum Grundkörper. An dem Streifen kann ebenfalls eine Abstütznoppe ausgebildet sein, über welche das Gehäuse an dem Fahrzeugbauteil abgestützt wird. Durch eine derartige Vorspannrippe mit einer Abstütznoppe wird ein besonders stabiler und spielfreier Sitz des Gehäuses an dem Fahrzeugbauteil gewährleistet. Dies insbesondere auch dann, wenn der Streifen mit der Abstütznoppe aus einem elastischen Material ausgebildet ist, etwa aus elastischem Kunststoff. Gegebenenfalls kann die Abstütznoppe aus Gummi ausgeführt werden.

Im Hinblick auf die Demontage erweist sich als besonders vorteilhaft, wenn zwischen den Rastnasen eine, insbesondere zylinderförmige, Aussparung ausgebildet ist, in welcher ein Werkzeug zum Lösen der Rastverbindung zwischen dem Befestigungsbolzen einerseits und den Rastnasen andererseits einführbar ist. Die Rastverbindung kann somit ohne viel Aufwand mithilfe des Werkzeugs gelöst werden. Die Aussparung ist insbesondere in Form einer länglichen Aufnahme bzw. eines länglichen und zylinderförmigen Lochs ausgebildet, so dass das Werkzeug - etwa ein Bolzen - in diese Aussparung ohne viel Aufwand eingesteckt und die Rastverbindung somit gelöst werden kann.

Das gesamte Gehäuse ist bevorzugt einstückig ausgebildet.

Ein erfindungsgemäßes Gehäuse für eine Komponente eines Kraftfahrzeugs umfasst eine Befestigungsplatte zum Befestigen des Gehäuses an einem Fahrzeugbauteil. In der Befestigungsplatte ist eine Durchgangsöffnung ausgebildet, in welche ein Befestigungsbolzen einsteckbar ist. An der Befestigungsplatte sind zumindest zwei Rastnasen angeordnet, welche dazu ausgebildet sind, beim Einstecken des Befestigungsbolzens in die Durchgangsöffnung in korrespondierende Rastkerben des Befestigungsbolzens einzurasten und somit eine Bewegung des Befestigungsbolzens in eine zur Einsteckrichtung entgegengesetzte Richtung zu verhindern. Bezüglich der Durchgangsöffnung sind die Rastnasen in radialer Richtung federnd ausgebildet, so dass durch Bewegen der Rastnasen in radialer Richtung von den Befestigungsbolzen weg die Rastverbindung zwischen den Befestigungsbolzen einerseits und den Rastnasen andererseits lösbar ist.

Die mit Bezug auf die erfindungsgemäße Befestigungsordnung vorgestellten bevorzugten Ausführungsformen und deren Vorteile gelten entsprechend für das erfindungsgemäße Gehäuse.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels näher erläutert, wie auch unter Bezugnahme auf die beigefügten Zeichnungen.

Es zeigen:
- Fig. 1: in schematischer und perspektivischer Darstellung ein Gehäuse für eine Fahrzeugkomponente gemäß einer Ausführungsform der Erfindung;
- Fig. 2: in schematischer und perspektivischer Darstellung das Gehäuse gemäß Fig. 1; und
- Fig. 3: in schematischer und perspektivischer Darstellung eine Befestigungsanordnung gemäß einer Ausführungsform der Erfindung.

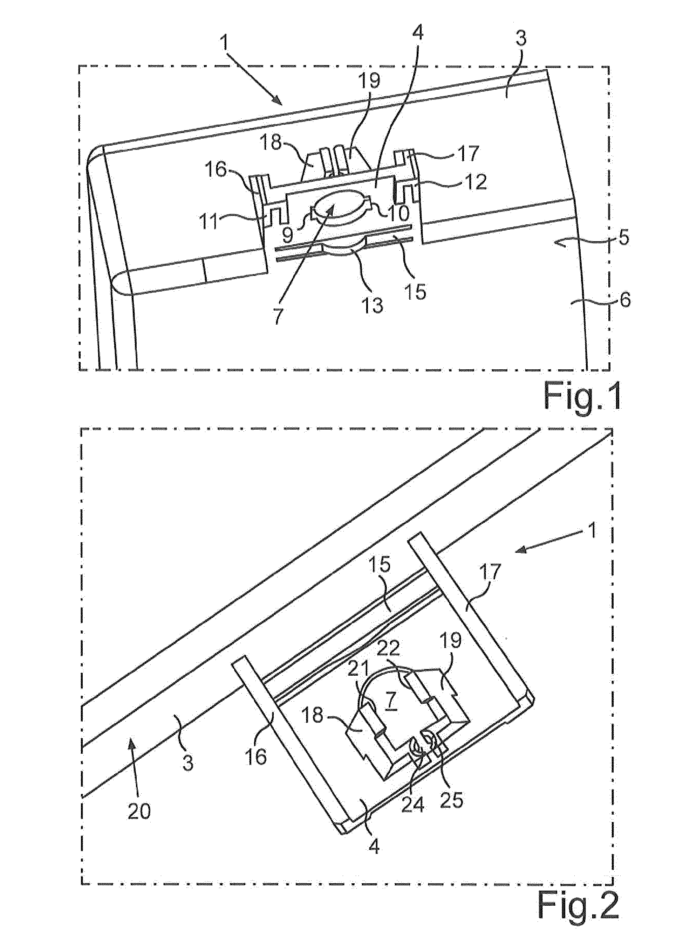

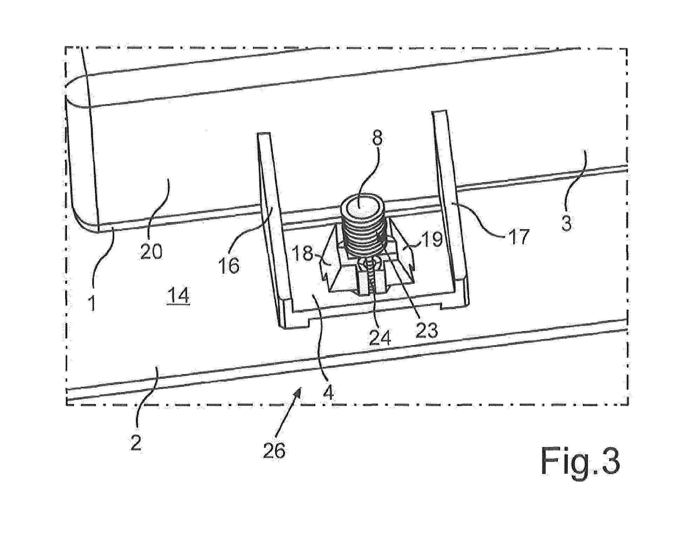

In Fig. 1 ist ein Gehäuse 1 dargestellt, welches zur Aufnahme einer elektronischen Komponente eines Kraftfahrzeugs, insbesondere eines Personenkraftwagens, ausgebildet ist. Im Ausführungsbeispiel dient das Gehäuse 1 zur Aufnahme eines Steuergerätes eines Fahrerassistenzsystems. Das Gehäuse 1 wird an einem Fahrzeugbauteil 2 (siehe Fig. 3) befestigt.

Das Gehäuse 1 weist einen Grundkörper 3 auf, welcher das tatsächliche Gehäuse darstellt und zur Aufnahme der Komponente dient. Von dem Grundkörper - nämlich von einer Seitenwand 20 - stehen seitlich zwei Trägerarme 16, 17 ab, die jeweils in Form einer dünnen Platte ausgebildet sind und sich parallel zueinander und senkrecht zu der Seitenwand 20 erstrecken.

Die Trägerarme 16, 17 tragen eine Befestigungsplatte 4, die mit einer Oberfläche 5 einer dem Fahrzeugbauteil 2 zugewandten Seite 6 des Grundkörpers 3 fluchtet. Die Befestigungsplatte 4 erstreckt sich somit in der Ebene der Oberfläche 5, und zwar zwischen den beiden Trägerarmen 16, 17.

Die Befestigungsplatte 4 hat die Form eines Rechtecks. In der Befestigungsplatte 4 ist eine Durchgangsöffnung 7 ausgebildet, welche zur Aufnahme eines korrespondierenden Befestigungsbolzens 8 (siehe Fig. 3) ausgebildet ist. Die Durchgangsöffnung 7 hat im Wesentlichen die Form eines Kreises mit zwei in radialer Richtung ausgebildeten Ausbuchtungen 9, 10.

An der dem Fahrzeugbauteil 2 zugewandten Seite 6 der Befestigungsplatte 4 sind an dieser Befestigungsplatte 4 insgesamt zwei Abstütznoppen 11,12 ausgebildet, welche zum Abstützen der Befestigungsplatte 4 an einer Befestigungsseite 14 des Fahrzeugbauteils 2 dienen. Die Abstütznoppen 11, 12 stehen somit von der Seite 6 der Befestigungsplatte 4 ab und zwar senkrecht zur Ebene der Befestigungsplatte 4. Die Abstütznoppen 11, 12 sind in jeweiligen, von dem Grundkörper 3 entfernten Eckbereichen der Befestigungsplatte 4 angeordnet, und zwar auf zwei gegenüberliegenden Seiten der Durchgangsöffnung 7. Die Abstütznoppen 11,12 sind außerdem n-förmig bzw. jeweils in Form eines Hufeisens ausgebildet.

Zwischen dem Grundkörper 3 und der Befestigungsplatte 4 ist in der Ebene der Befestigungsplatte 4 ein Streifen 15 vorgesehen, der die Funktion einer Vorspannrippe aufweist. Dieser Streifen 15 wird ebenfalls durch die Trägerarme 16, 17 getragen bzw. erstreckt sich zwischen den beiden Trägerarmen 16, 17. Sowohl zwischen dem Streifen 15 und dem Grundkörper 3 als auch zwischen dem Streifen 15 und der Befestigungsplatte 4 ist jeweils ein Schlitz bzw. Abstand vorhanden, so dass der Streifen elastisch bzw. federnd bezüglich der Befestigungsplatte 4 und des Grundkörpers 3 bewegbar ist.

An dem Streifen 15 ist ebenfalls eine Abstütznoppe 13 ausgebildet, die etwa in der Mitte des Streifens 15 angeordnet ist. Die Abstütznoppe 13 hat die Form eines Kreissegmentes - etwa eines Halbkreises.

Das gesamte Gehäuse 1 ist im Ausführungsbeispiel aus elastischem Kunststoff ausgebildet. Somit ist auch die Abstütznoppe 13 und der Streifen 15 elastisch ausgebildet, sodass das Gehäuse 1 spielfrei an dem Fahrzeugbauteil 2 befestigt werden kann.

Das gesamte Gehäuse 1 ist einstückig ausgebildet.

Von der Befestigungsplatte 4 stehen auch zwei Rastnasen 18, 19 ab, nämlich an einer von der Seite 6 abgewandten Seite der Befestigungsplatte 4.

In Fig. 2 ist das Gehäuse 1 aus einer anderen Perspektive dargestellt. Gezeigt sind die beiden Trägerarme 16, 17, die mit dem Grundkörper 3, nämlich mit seiner Seitenwand 20, einstückig verbunden sind. Die Trägerarme 16, 17 tragen die Befestigungsplatte 4 bzw. die Befestigungsplatte 4 erstreckt sich zwischen den Armen 16, 17. In Fig. 2 ist auch der Streifen 15 zu erkennen, der sich ebenfalls zwischen den Armen 16, 17 erstreckt, und zwar zwischen dem Grundkörper 3 und der Befestigungsplatte 4. An der Rückseite des Streifens 5 ist die Abstütznoppe 13 (siehe Fig. 1) ausgebildet.

Von der Befestigungsplatte 4 erheben sich die beiden Rastnasen 18, 19, die insgesamt eine symmetrische Rasteinrichtung bilden. Die Rastnasen 18, 19 sind in Richtung aufeinander zu und voneinander weg federnd ausgebildet und liegen - in radialer Richtung gesehen - an zwei gegenüberliegenden Seiten der Durchgangsöffnung 7. Die Rastnasen 18, 19 weisen jeweils eine Rastspitze bzw. Rastkante 21, 22 auf, die in korrespondierende Rastkerben 23 des Befestigungsbolzens 8 einrasten können.

Außerdem sind die Rastnasen 18, 19 - in der Draufsicht - etwa L-förmig ausgebildet, sodass zwischen den Rastnasen 18, 19 eine Aussparung 24 ausgebildet ist, die zur Aufnahme eines Werkzeugs zur Demontage dient. Die Aussparung 24 ist in Form einer zylinderförmigen Aufnahme für das Werkzeug ausgebildet. Das Werkzeug - etwa ein Bolzen - kann in die Aussparung 24 eingeführt werden, und die Rastnasen 18, 19 können mit Hilfe des Werkzeugs voneinander weg bewegt werden, nämlich in radialer Richtung. Somit wird die Rastverbindung zwischen dem Befestigungsbolzen 8 und den Rastnasen 18, 19 gelöst. Die Aussparung 24 ist insbesondere achsparallel neben der Durchgangsöffnung 7 ausgebildet. Die Aussparung 24 weist außerdem eine trichterförmige Aufnahme 25 auf, sodass das Werkzeug ohne viel Aufwand in die Aussparung 24 eingeführt werden kann.

In Fig. 3 ist eine Befestigungsanordnung 26 des Gehäuses 1 an dem Fahrzeugbauteil 2 näher dargestellt. Das Fahrzeugbauteil 2 ist ein Blechteil. Der Befestigungsbolzen 8 kann ein Schweißbolzen sein, welcher mit dem Fahrzeugbauteil 2 fest verbunden ist. Alternativ kann auch vorgesehen sein, dass der Befestigungsbolzen 8 in eine im Fahrzeugbauteil 2 ausgebildete Öffnung eingesteckt wird.

Bei der Montage des Gehäuses 1 an dem Fahrzeugbauteil 2 wird das Gehäuse 1 bzw. die Befestigungsplatte 4 mit der Seite 14 des Fahrzeugbauteils 2 in Anlage gebracht. Dabei wird die Befestigungsplatte 4 auf den Befestigungsbolzen 8 aufgesteckt bzw. der Befestigungsbolzen 8 wird in die Durchgangsöffnung 7 eingesteckt. Die beiden Rastnasen 18, 19 rasten dabei mit ihren Rastspitzen 21, 22 in die korrespondierenden Rastkerben 23 des Befestigungsbolzens 8 ein und verhindern somit, dass sich der Befestigungsbolzen 8 in eine zur Einsteckrichtung entgegengesetzte Richtung bezüglich des Gehäuses 1 bewegt. Die Befestigungsplatte 4 wird über die Abstütznoppen 11, 12, 13 an dem Fahrzeugbauteil 2 abgestützt, wodurch ein spielfreier Sitz gewährleistet wird. In der Endstellung sind die Rastnasen 18,19 in einer der Rastkerben 23 des Befestigungsbolzens 8 eingerastet und verhindern somit aufgrund der Federkraft ein Lösen der Rastverbindung und somit eine Bewegung des Gehäuses 1 relativ zum Fahrzeugbauteil 2. Zur Demontage des Gehäuses 1 bzw. zum Lösen der Rastverbindung wird das Werkzeug in die Aussparung 24 eingesteckt, sodass die beiden Rastnasen 18, 19 in Richtung voneinander weg bewegt und die Rastverbindung gelöst wird.

## Patentansprüche

1. Befestigungsanordnung (26) eines Gehäuses (1) für eine Komponente eines Kraftfahrzeugs an einem Fahrzeugbauteil (2), bei welcher das Gehäuse (1) eine Befestigungsplatte (4) mit einer Durchgangsöffnung (7) aufweist, in welche ein Befestigungsbolzen (8) zur Befestigung des Gehäuses (1) an dem Fahrzeugbauteil (2) einsteckbar ist, und an der Befestigungsplatte (4) zumindest zwei Rastnasen (18, 19) angeordnet sind, die beim Einstecken des Befestigungsbolzens (8) in die Durchgangsöffnung (7) in korrespondierende Rastkerben (23) des Befestigungsbolzens (8) einrasten,
**dadurch gekennzeichnet, dass**
die Rastnasen (18, 19) bezüglich des Befestigungsbolzens (8) in radialer Richtung federnd ausgebildet sind, so dass durch Bewegen der Rastnasen (18, 19) in radialer Richtung von dem Befestigungsbolzen (8) weg die Rastverbindung zwischen dem Befestigungsbolzen (8) einerseits und den Rastnasen (18, 19) andererseits lösbar ist.

2. Befestigungsanordnung (26) nach Anspruch 1,
**dadurch gekennzeichnet, dass**
die Rastnasen (18, 19) in radialer Richtung an zwei gegenüberliegenden Seiten der Durchgangsöffnung (7), insbesondere spiegelsymmetrisch, angeordnet und in Richtung aufeinander zu und voneinander weg federnd ausgebildet sind, so dass durch Bewegen der Rastnasen (18, 19) in Richtung voneinander weg die Rastverbindung zwischen dem Befestigungsbolzen (8) einerseits und den Rastnasen (18, 19) andererseits lösbar ist.

3. Befestigungsanordnung (26) nach Anspruch 1 oder 2,
**dadurch gekennzeichnet, dass**
das Gehäuse (1) zur Aufnahme eines Steuergeräts des Kraftfahrzeugs als Komponente ausgebildet ist.

4. Befestigungsanordnung (26) nach einem der vorhergehenden Ansprüche,
**dadurch gekennzeichnet, dass**
die Rastnasen (18, 19) einstückig mit der Befestigungsplatte (4) ausgebildet sind.

5. Befestigungsanordnung (26) nach einem der vorhergehenden Ansprüche,
**dadurch gekennzeichnet, dass**
die Rastnasen (18, 19) und/oder die Befestigungsplatte (4) aus elastischem Kunststoff ausgebildet sind.

6. Befestigungsanordnung (26) nach einem der vorhergehenden Ansprüche,
**dadurch gekennzeichnet, dass**
an einer dem Fahrzeugbauteil (2) zugewandten Seite der Befestigungsplatte (4) zumindest eine Abstütznoppe (11,12) zum Abstützen der Befestigungsplatte (4) an dem Fahrzeugbauteil (2) angeordnet ist.

7. Befestigungsanordnung (26) nach Anspruch 6,
**dadurch gekennzeichnet, dass**
die Abstütznoppe (11, 12) aus einem elastischen Material, insbesondere aus elastischem Kunststoff und/oder aus Gummi, ausgebildet sind.

8. Befestigungsanordnung (26) nach einem der vorhergehenden Ansprüche,
**dadurch gekennzeichnet, dass**
das Gehäuse (1) zwei von einem Grundkörper (3) des Gehäuses (1) abstehende Trägerarme (16, 17) aufweist, welche die Befestigungsplatte (4) tragen.

9. Befestigungsanordnung (26) nach Anspruch 8,
**dadurch gekennzeichnet, dass**
zwischen dem Grundkörper (3) und der Befestigungsplatte (4) ein durch die Trägerarme (16, 17) getragener Streifen (15) in der Ebene der Befestigungsplatte (4) angeordnet ist, an welchem eine Abstütznoppe (13) zum Abstützen des Gehäuses (1) an dem Fahrzeugbauteil (2) ausgebildet ist.

10. Befestigungsanordnung (26) nach Anspruch 9,
**dadurch gekennzeichnet, dass**
der Streifen (15) mit der Abstütznoppe (13) aus einem elastischen Material, insbesondere aus elastischem Kunststoff, ausgebildet ist.

11. Befestigungsanordnung (26) nach einem der vorhergehenden Ansprüche,
**dadurch gekennzeichnet, dass**
zwischen den Rastnasen (18, 19) eine, insbesondere zylinderförmige, Aussparung (24) ausgebildet ist, in welche ein Werkzeug zum Lösen der Rastverbindung zwischen dem Befestigungsbolzen (8) einerseits und den Rastnasen (18, 19) andererseits einführbar ist.

12. Gehäuse (1) für eine Komponente eines Kraftfahrzeugs, mit einer Befestigungsplatte (4) zum Befestigen des Gehäuses (1) an einem Fahrzeugbauteil (2), wobei in der Befestigungsplatte (4) eine Durchgangsöffnung (7) ausgebildet ist, in welche ein Befestigungsbolzen (8) einsteckbar ist, und an der Befestigungsplatte (4) zumindest zwei Rastnasen (18, 19) angeordnet sind, die dazu ausgebildet sind, beim Einstecken des Befestigungsbolzens (8) in die Durchgangsöffnung (7) in korrespondierende Rastkerben (23) des Befestigungsbolzens (8) einzurasten,
**dadurch gekennzeichnet, dass**
bezüglich der Durchgangsöffnung (7) die Rastnasen (18, 19) in radialer Richtung federnd ausgebildet sind, so dass durch Bewegen der Rastnasen (18, 19) in radialer Richtung von dem Befestigungsbolzen (8) weg die Rastverbindung zwischen dem Befestigungsbolzen (8) einerseits und den Rastnasen (18,19) andererseits lösbar ist.
